# EUROPEAN PATENT SPECIFICATION

(11) **EP 4 660 966 B1**
(45) Date of publication and mention of the grant of the patent: **21.10.2026**
(21) Application number: 25180619.6
(22) Date of filing: 04.06.2025
(51) Int. Cl.: G06V 10/82

(54) **METHOD AND SYSTEM FOR CREATING LOCATION AWARE DISENTANGLED ATTRIBUTE REPRESENTATION**
VERFAHREN UND SYSTEM ZUR ERZEUGUNG EINER ORTSBEWUSSTEN ENTWIRRTEN ATTRIBUTDARSTELLUNG
PROCÉDÉ ET SYSTÈME DE CRÉATION D'UNE REPRÉSENTATION D'ATTRIBUT DÉSENCHEVÊTRÉ SENSIBLE À LA LOCALISATION

(30) Priority: 05.06.2024 IN 202421043670
(43) Date of publication of application: 10.12.2025
(73) Proprietor: Tata Consultancy Services Limited, Maharashtra (IN)
(72) Inventor: BHATTACHARYA, GAURAB, 560066 Bangalore (IN); GUBBI LAKSHMINARASIMHA, JAYAVARDHANA RAMA, 560066 Bangalore (IN); BANGALORE SAMPATHKUMAR, VIVEK, 560066 Bangalore (IN); RAJITH BHARGAV, PARVATAM, 560066 Bangalore (IN); VASUDEVAN, BAGYA LAKSHMI, 600096 Chennai (IN); PAL, ARPAN, 700160 Kolkata (IN)
(74) Representative: Goddar, Heinz J.

(56) References cited:
- BEATRIZ QUINTINO FERREIRA ET AL: "Pose Guided Attention for Multi-label Fashion Image Classification", ARXIV.ORG, CORNELL UNIVERSITY LIBRARY, 201 OLIN LIBRARY CORNELL UNIVERSITY ITHACA, NY 14853, 12 November 2019 (2019-11-12), XP081531056
- BHATTACHARYA GAURAB ET AL: "DAtRNet: Disentangling Fashion Attribute Embedding for Substitute Item Retrieval", 2022 IEEE/CVF CONFERENCE ON COMPUTER VISION AND PATTERN RECOGNITION WORKSHOPS (CVPRW), IEEE, 19 June 2022 (2022-06-19), pages 2282 - 2286, XP034174146, DOI: 10.1109/CVPRW56347.2022.00253
- DONG JIANFENG ET AL: "Fine-Grained Fashion Similarity Prediction by Attribute-Specific Embedding Learning", IEEE TRANSACTIONS ON IMAGE PROCESSING, IEEE, USA, vol. 30, 1 October 2021 (2021-10-01), pages 8410 - 8425, XP011882436, ISSN: 1057-7149, [retrieved on 20211006], DOI: 10.1109/TIP.2021.3115658
- SU HAIBO ET AL: "Where to Look and How to Describe: Fashion Image Retrieval With an Attentional Heterogeneous Bilinear Network", IEEE TRANSACTIONS ON CIRCUITS AND SYSTEMS FOR VIDEO TECHNOLOGY, IEEE, USA, vol. 31, no. 8, 30 October 2020 (2020-10-30), pages 3254 - 3265, XP011870363, ISSN: 1051-8215, [retrieved on 20210802], DOI: 10.1109/TCSVT.2020.3034981
- CHEN BAO ET AL: "MMFL-Net: Multi-scale and Multi-granularity Feature Learning for Cross-domain Fashion Retrieval", ARXIV.ORG, CORNELL UNIVERSITY LIBRARY, 201 OLIN LIBRARY CORNELL UNIVERSITY ITHACA, NY 14853, 27 October 2022 (2022-10-27), XP091355272, DOI: 10.1007/S11042-022-13648-8
- LING XIAO ET AL: "Attribute-Guided Multi-Level Attention Network for Fine-Grained Fashion Retrieval", ARXIV.ORG, CORNELL UNIVERSITY LIBRARY, 201 OLIN LIBRARY CORNELL UNIVERSITY ITHACA, NY 14853, 26 April 2024 (2024-04-26), XP091738464, DOI: 10.1109/ACCESS.2024.3383785
- BHATTACHARYA GAURAB ET AL: "Location-aware Fashion Attribute Recognition and Retrieval", 2024 INTERNATIONAL JOINT CONFERENCE ON NEURAL NETWORKS (IJCNN), IEEE, 30 June 2024 (2024-06-30), pages 1 - 8, XP034690480, DOI: 10.1109/IJCNN60899.2024.10650203

## Description

### CROSS-REFERENCE TO RELATED APPLICATIONS AND PRIORITY

The present application claims priority from Indian provisional application no. 202421043670, filed on June 05, 2024.

### TECHNICAL FIELD

The disclosure herein generally relates to image processing, and, more particularly, to a method and system for location aware fashion attribute recognition and retrieval.

### BACKGROUND

E-commerce websites host thousands of fashion products. These products are associated with one or more images, and meta-data such as attributes, manufacturer details, price, etc. A product description page (PDP) displays these details to the user. Traditionally, retailers upload information in PDP manually, which is time-consuming, and requires the user to have domain expertise in fashion. The errors in the product details can negatively impact the retrieval, filtering, and recommendations process. Additionally, it can cause inaccurate modeling of user preferences, resulting in a subpar online shopping experience for the user. Recent advancements in deep learning provide the ability to automate by creating holistic product descriptions using attribute features. In this context, learning attribute embedding can address a vast range of problems in retail and similar scenarios.

In recent years, several research works have individually addressed these problems. These methods consider entire image to extract disentangled attribute representation. However, existing set of visual attributes are mostly dominant in a part of fashion product; such as, localized attributes e.g., sleeve length, neckline, etc. are found in sleeve and collar region, respectively; and global attributes e.g., color, pattern, etc., are mostly found in the torso region. However, existing methods try to obtain attribute representation from the entire image, either by label-based or contrastive learning. These models focus on irrelevant product parts to decide on the attribute localized on a specific part, while the optimum embedding is lost during the training.

A possible approach to alleviate this problem is to localize parts of the fashion product based on their semantic meaning. This, however, is a data annotation bottleneck, and large scale part annotation is not a feasible solution. Existing works address this bottleneck by training a part localization model using several coarse annotations (e.g., foreground mask, landmark, bounding box, and foreground mask) or part segmentation maps of a few classes. However, these approaches introduce additional computational overhead. BEATRIZ QUINTINO FERREIRA ET AL: "Pose Guided Attention for Multi-label Fashion Image Classification" proposes a compact framework with guided attention for multi-label classification in the fashion domain. The visual semantic attention model (VSAM) is supervised by automatic pose extraction creating a discriminative feature space. VSAM performs on pair with previous works on the DeepFashion dataset, even without using any landmark annotations.

### SUMMARY

Embodiments of the present disclosure present technological improvements as solutions to one or more of the above-mentioned technical problems recognized by the inventors in conventional systems. Invention is set out in appended set of claims 1-9.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for disentangled attribute representation creation, according to some embodiments of the present disclosure.
FIGS. 2A and 2B illustrate flow diagram depicting steps involved in the process of disentangled attribute representation creation being performed by the system of FIG. 1, according to some embodiments of the present disclosure.
FIG. 3 illustrates a flow diagram depicting steps involved in the process of fusing a first set of features and a computed modified second set of features by the system of FIG. 1, according to some embodiments of the present disclosure.
FIGS. 4A through 4E depict components of an example functional architecture of the system of FIG. 1 for the disentangled attribute representation, according to some embodiments of the present disclosure.
FIG. 5 depicts architecture of Global Context aware Local Attention (GCLA) Fusion block used by the system of FIG. 1, for the disentangled attribute representation creation, according to some embodiments of the present disclosure.
FIG. 6 depicts comparison between class activation maps of the method 200 and a plurality of state of the art approaches, according to some embodiments of the present disclosure.
FIG. 7 depicts examples of substitute item retrieval using the system of FIG. 1, with no, one, two, and three attribute manipulations, according to some embodiments of the present disclosure.
FIG. 8 depicts visual examples of taxonomy classification and comparison with state-of-the-art approaches, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In the context of fashion attribute extraction based on semantic meaning, there exists a data annotation bottleneck, and large scale part annotation is not a feasible solution. Existing works address this bottleneck by training a part localization model using several coarse annotations (e.g., foreground mask, landmark, bounding box, and foreground mask) or part segmentation maps of a few classes. However, these approaches introduce additional computational overhead. Embodiments disclosed herein provide a method and system for location aware fashion attribute recognition and retrieval, in which a plurality of disentangled attribute embeddings of an input image of a fashion item are generated by fusing global and local features extracted from the input image using a global context-aware local attention (GCLA) fusion block, wherein the plurality of disentangled attribute embeddings represent a plurality of unique features of the fashion item in the input image.

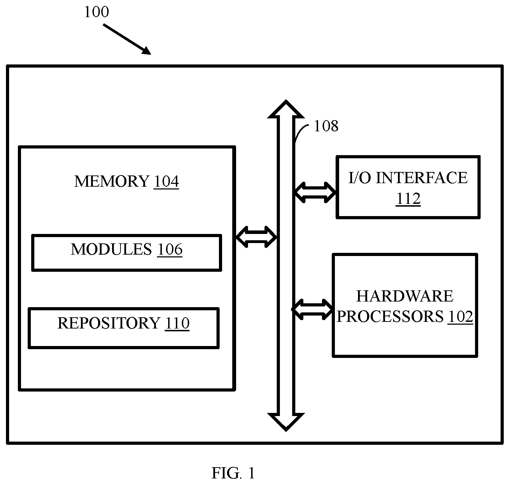

Referring now to the drawings, and more particularly to FIG. 1 through FIG. 8, where similar reference characters denote corresponding features consistently throughout the figures, there are shown preferred embodiments and these embodiments are described in the context of the following exemplary system and/or method.

FIG. 1 illustrates an exemplary system 100 for disentangled attribute representation creation, according to some embodiments of the present disclosure.

The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

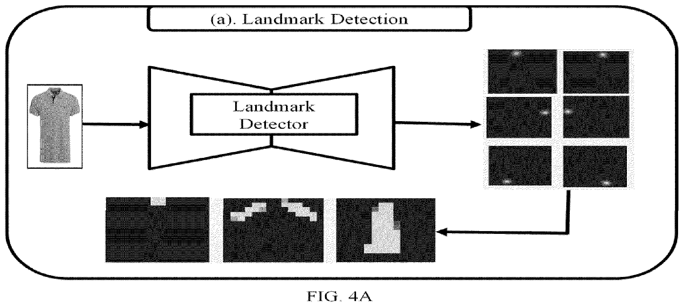

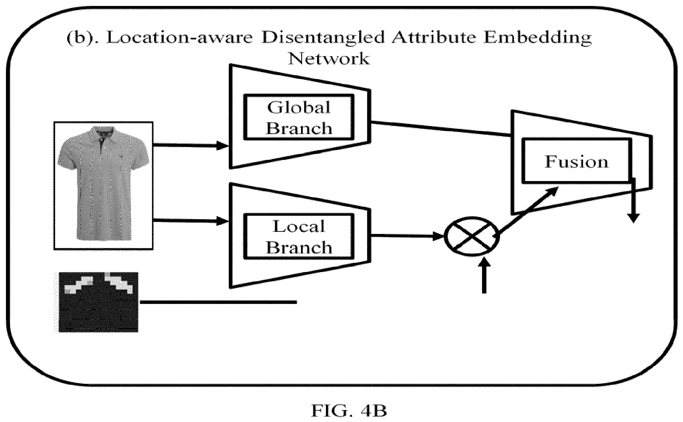

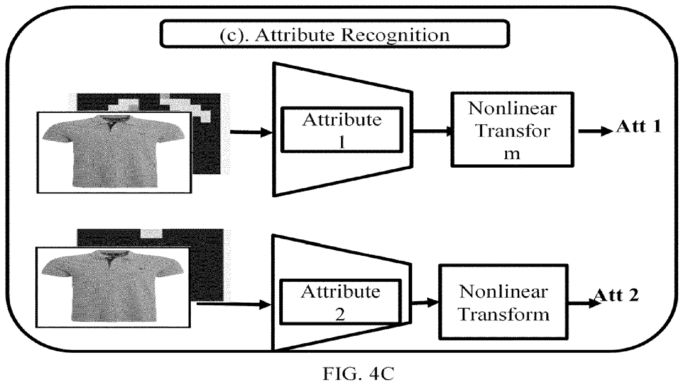

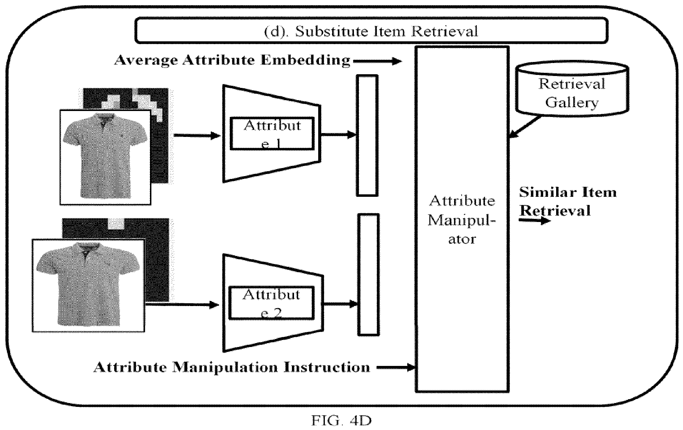

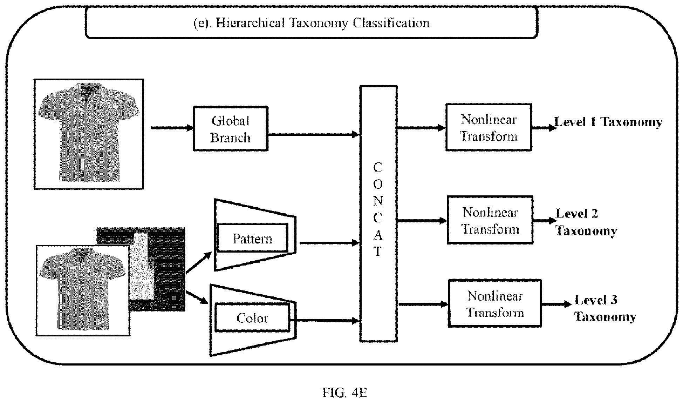

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106 such as module for Landmark Detection, Location-aware Disentangled Attribute Embedding Network, module for attribute recognition, module for substitute item retrieval, and module for hierarchical taxonomy classification, as depicted in FIGS. 4A through 4E

Further, the plurality of modules 106 include programs or coded instructions that supplement applications or functions performed by the system 100 for executing different steps involved in the process of the method and system for location aware fashion attribute recognition and retrieval being performed by the system of FIG. 1. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the location aware fashion attribute recognition and retrieval.

A? data repository (or repository) 110 may include a plurality of abstracted piece of code for refinement and data that is processed, received, or generated as a result of the execution of the plurality of modules in the module(s) 106. The data repository may also store the image of fashion item obtained as input, and the data generated by each of the module for Landmark Detection, Location-aware Disentangled Attribute Embedding Network, module for attribute recognition, module for substitute item retrieval, and module for hierarchical taxonomy classification, while generating associated disentangled attribute embeddings.

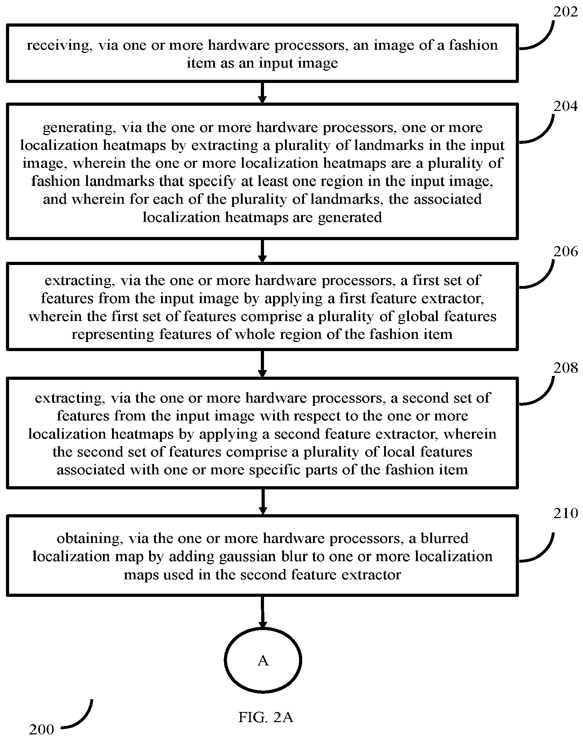

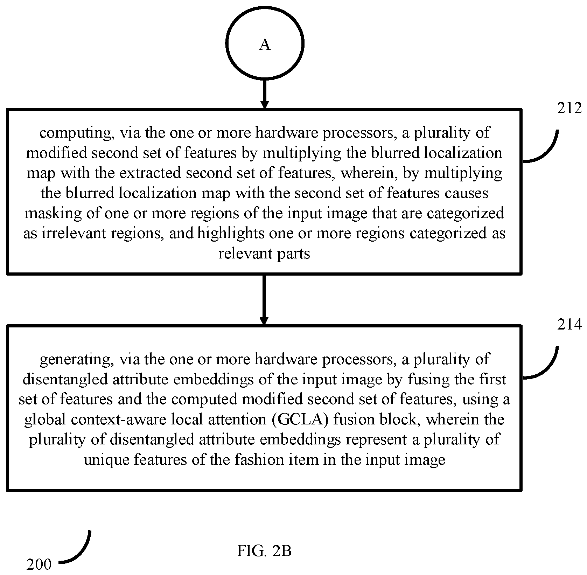

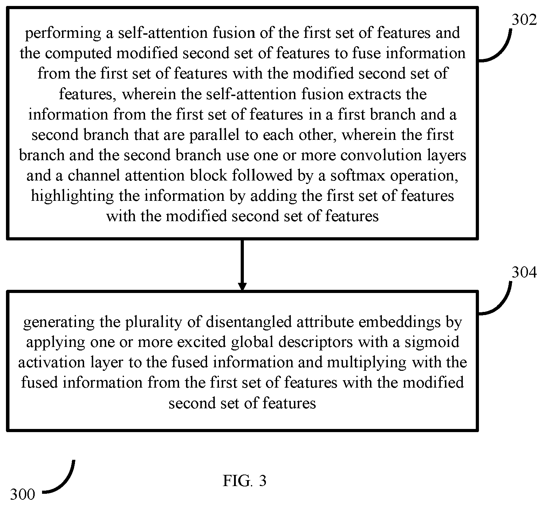

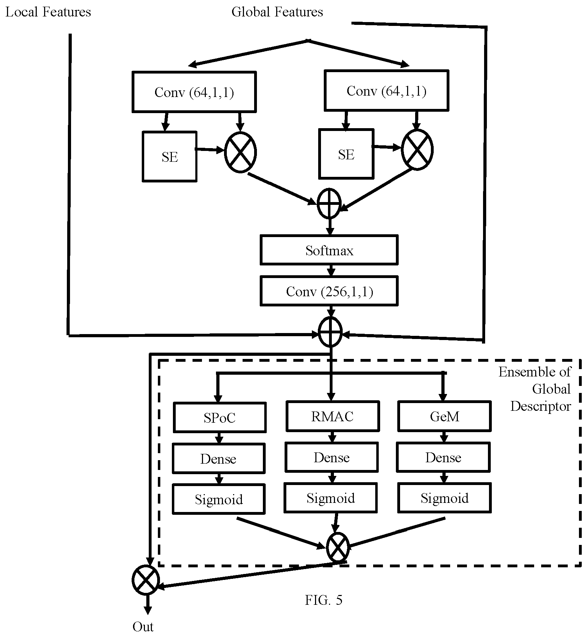

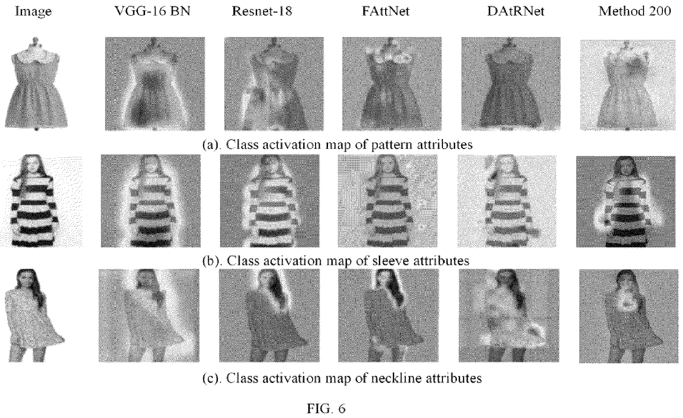

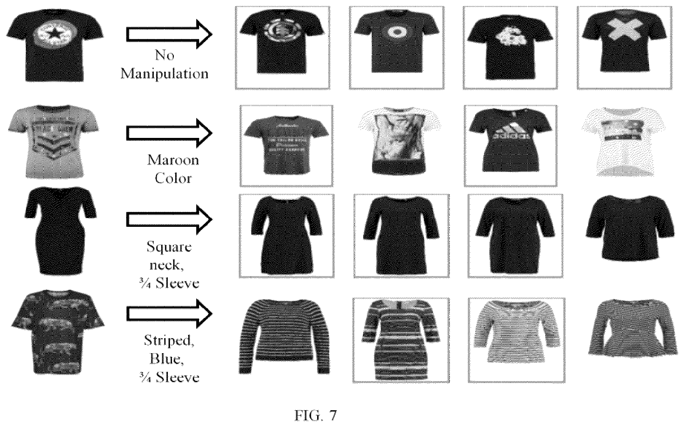

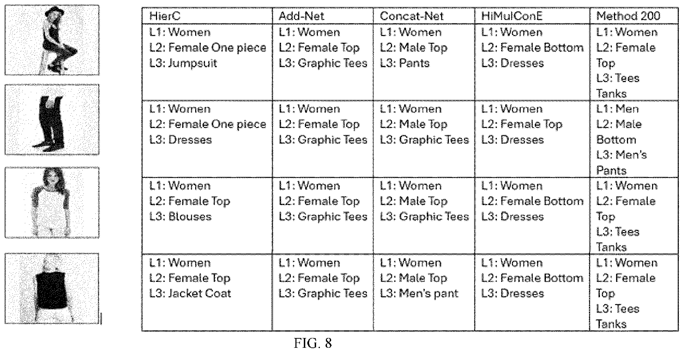

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the flow diagrams in FIG. 2 and FIG. 3, and the example functional architecture diagram in FIGS. 4A through 4E, a GCLA fusion block diagram in FIG. 5, a plurality of class activation maps in FIG. 6, visual examples of substitute item retrieval in FIG. 7, and visual example of taxonomy classification and comparison with state-of-the-art approaches as in FIG. 8.

FIGS. 2A and 2B illustrate flow diagram depicting steps involved in the process of disentangled attribute representation creation being performed by the system of FIG. 1, according to some embodiments of the present disclosure. In an embodiment, the system 100 comprises one or more data storage devices or the memory 104 operatively coupled to the processor(s) 102 and is configured to store instructions for execution of steps of a method 200 by the processor(s) or one or more hardware processors 102. The steps of the method 200 of the present disclosure will now be explained with reference to the components or blocks of the system 100 as depicted in FIG. 1, the steps of flow diagram as depicted in FIGS. 2, and 3, and the functional architecture as depicted in FIGS. 4A through 4E. Although process steps, method steps, techniques or the like may be described in a sequential order, such processes, methods, and techniques may be configured to work in alternate orders. **In** other words, any sequence or order of steps that may be described does not necessarily indicate a requirement that the steps to be performed in that order. The steps of processes described herein may be performed in any order practical. Further, some steps may be performed simultaneously.

At step 202 of the method 200, the system 100 receives, via the one or more hardware processors 102, an image of a fashion item as an input image. The fashion attribute maybe a dress/apparel or any other similar object. The input image is represented as $I ∈ {ℝ}^{\left(3∗H∗W\right)}$ where *H* is height and *W* is width.

Further, at step 204 of the method 200, the system 100 generates, via the one or more hardware processors 102, one or more localization heatmaps for the input image. In an embodiment, the one or more localization heatmaps are generated by extracting a plurality of landmarks in the input image. The one or more localization heatmaps are a plurality of fashion landmarks that specify at least one region in the input image, and wherein for each of the plurality of landmarks, the associated localization heatmaps are generated. The system 100 may use an ACNet architecture as a landmark detector for generating the one or more localization heatmaps. The localization heatmaps are represented as ${h}_{m} ϵ {ℝ}^{\left(L∗H∗W\right)}$, where *L* denotes number of landmarks. The localization heatmaps provide specific guidance on part of the fashion item. In this process, the system 100 creates localization maps ${I}_{m} ϵ {ℝ}^{\left(P∗H∗W\right)}$ for each part *p ε*[1, *P*], connecting associated landmarks and creating a coarse estimation of the fashion item by connecting the landmarks. Here, *P* denotes number of parts in the fashion item. Further, Gaussian blur is applied to the one or more localization heatmaps to highlight one or more neighboring regions. The creation of localization maps depends upon the number of relevant landmarks for attribute localization. Different possible scenarios are:- 1) attribute is located around one landmark only, e.g., button style attribute around button landmark, and in this case, a circular neighborhood centered around landmark with fixed or dynamic radius is considered; 2) attribute is located around two landmarks, e.g., neckline attribute between left and right neckline landmarks, and in this case, an oriented rectangular box is considered, where both landmarks are present in the neighborhood; and 3) attribute is located around more than two landmarks, e.g., pattern attribute is present between two neckline and two hemline landmarks, and in this scenario, a polygon connected by all relevant landmarks is considered.

Further, at step 206 of the method 200, the system 100 extracts, via the one or more hardware processors 102, a first set of features from the input image by applying a first feature extractor. The first set of features comprise a plurality of global features representing features of whole region of the fashion item. The first feature extractor may use a data model that is trained on a training dataset comprising a plurality of training images and associated global features.

Further, at step 208 of the method 200, the system 100 extracts, via the one or more hardware processors 102, a second set of features from the input image with respect to the one or more localization heatmaps by applying a second feature extractor. The second set of features comprise a plurality of local features associated with one or more specific parts of the fashion item. The second feature extractor may use a data model that is trained on a training dataset comprising a plurality of training images and associated local features.

Further, at step 210 of the method 200, the system 100 obtains, via the one or more hardware processors 102, a blurred localization map by adding gaussian blur to one or more localization maps used in the second feature extractor. By applying the gaussian blur, the system 100 addresses possibility that features from irrelevant regions may fuse to output of the second feature extractor, causing loss of localization.

Further, at step 212 of the method 200, the system 100 computes, via the one or more hardware processors 102, a plurality of modified second set of features by multiplying the blurred localization map with the extracted second set of features. By multiplying the blurred localization map with the second set of features, masking of one or more regions of the input image that are categorized as irrelevant regions, and highlighting of one or more regions categorized as relevant parts, are obtained.

Further, at step 214 of the method 200, the system 100 generates, via the one or more hardware processors 102, a plurality of disentangled attribute embeddings of the input image by fusing the first set of features and the computed modified second set of features, using a global context-aware local attention (GCLA) fusion block. The plurality of disentangled attribute embeddings represent a plurality of unique features of the fashion item in the input image. Architecture of the GCLA fusion block is depicted in FIG. 5. A first stage of the architecture, which forms a self-attention mechanism, includes two (64, 1, 1) convolution blocks followed by associated SE blocks ad in turn by a (256, 1, 1) convolution block. This first stage processes the global features. A second stage of the architecture includes an ensemble of global descriptors, SPoC, regional MAC, and GeM, followed by respective dense layers, and Sigmoid layers. Working of the GCLA fusion block is depicted in method 300 in FIG. 3. At step 302 of the method 300, the GCLA fusion block captures a set of relevant information from the global features, required for the fusion, using the self-attention mechanism performing a self-attention fusion of the first set of features and the computed modified second set of features to fuse information from the first set of features with the modified second set of features, wherein the self-attention fusion extracts the information from the first set of features in a first branch and a second branch that are parallel to each other, wherein the first branch and the second branch use one or more convolution layers and a channel attention block followed by a softmax operation, highlighting the information by adding the first set of features with the modified second set of features. Further, at step 302 of the method 300, the plurality of disentangled attribute embeddings are generated by applying one or more excited global descriptors with a sigmoid activation layer to the fused information and multiplying with the fused information from the first set of features with the modified second set of features.

The system 100 uses the plurality of disentangled attribute embeddings for at least one of a) a location aware fashion attribute recognition, b) an attribute-aware similar item retrieval, and c) fashion taxonomy classification. Each of these applications is explained below:

Attribute Recognition: For attribute recognition, the system 100 uses a trainable attribute embedding block, trained on the disentangled attribute embeddings, with a non-linear transformation model, as in the architecture given in FIGS. 4A through 4E. This non-linear transformation model consists of global average pooling that provides disentangled attribute vector and a dense layer for attribute classification. The entire model is trained using cross-entropy loss function which considers output logit and ground truth attribute annotations.

Attribute-aware Substitute Item Retrieval: Using a pre-trained attribute embedding module among the components of the example functional architecture as in FIGS. 4A through 4E, the system 100 represents a plurality of images as an aggregation of the attribute representation. Here, concatenation is used to aggregate the disentangled attribute vectors. For substitute item retrieval with only query images, the system 100 finds L2 distance between disentangled attribute vectors of images from the retrieval gallery to that of the query image and retrieve Top-k images with least distance. For substitute item retrieval with query image and one/multiple attribute manipulation instructions, the query vector is modified by generic attribute embedding of the corresponding target attribute class and other part of this vector remains unaltered. This modified vector is then used to find Top-k retrieved items. The generic attribute embedding is computed by finding average of feature representation of that attribute from the entire retrieval gallery.

Hierarchical Taxonomy Classification: The system 100 uses one or more pre-trained attribute embedding module among the components of the example functional architecture as in FIGS. 4A through 4E for color and pattern attributes for taxonomy classification. With this, a global embedding vector of VGG-16 with batch normalization trained using level-3 annotations of the corresponding dataset is used. These three vectors are then concatenated to represent the aggregated representation of each item for hierarchical classification. This embedding is used in three parallel branches corresponding to three levels of hierarchical fashion taxonomy. Each branch constitutes one classification layer and two intermediate layers of dimension 512 and 128 with ReLU activation function and dropout of 0.25. The branches are trained separately using cross-entropy loss function, which in turn performs the hierarchical taxonomy classification.

### Experimental Data:

### 1. Experimental Setup

Datasets: Performance of the system 100 was evaluated on three fashion retail applications: 1) Fashion Attribute Recognition; 2) Attribute-aware substitute item retrieval; and 3) Hierarchical Fashion Taxonomy Classification. For these applications, DeepFashion and Shopping100k datasets. At a part localization stage, the fashion item considered was divided into three parts: neck region, sleeve region, and body region, having at least one attribute for each part.

For fashion attribute recognition and attribute-aware substitute item retrieval, a category and attribute prediction benchmark subset from DeepFashion dataset was considered. For these applications, neckline, sleeve length and pattern attributes from DeepFashion and neckline, sleeve length, pattern and color attributes from Shopping100k datasets were used. For hierarchical taxonomy classification, In-Shop retrieval subset of DeepFashion, which provides fashion images worn by human models with variations in poses, occlusions and illuminations, was considered. Taxonomy classifications were performed using three levels: gender (male, female), clothing type (upper-wear, bottom-wear, full-body and outer-wear) and product category (shirt, trouser, etc.). Query subset was used as testing image for taxonomy classification. For Shopping100k, similar levels as in DeepFashion were considered, and the dataset was split in 3:2 ratio while keeping similar image ratio in every class for partition.

Training setup: Creation of disentangled attribute embedding vector is a multi-step training process. In the first step, the ACNet architecture was trained with cross-entropy loss function using DeepFashion datasets to detect six upper-body and eight full body landmarks. From these landmark heatmaps, neighborhood maps were created by encapsulating regions within two necklines for neckline part, area between neckline and sleeve for sleeve part and the area between neckline, sleeve and hemline as body part. Then, relevant part localization map was used to create disentangled attribute embeddings for downstream applications. These vectors and models were further fine-tuned for attribute recognition. For all the experiments, Adam optimizer with learning rate of 0.001 was used.

**TABLE I: Attribute recognition performance of method 200 and comparison with state-of-the-art using classification accuracy**

| Model | DeepFashion | | | Shopping100k | | | |
|---|---|---|---|---|---|---|---|
| | Pattern | Sleeve | Neckline | Color | Neckline | Pattern | Sleeve |
| ResNet-18 | 68.33 | 86.81 | 70.97 | 70.69 | 74.72 | 80.36 | 86.43 |
| VGG-16-BN | 72.56 | 90.75 | 74.98 | 69.66 | 80.20 | 83.60 | 87.05 |
| F-AttNet | 71.53 | 90.00 | 73.80 | 71.31 | 78.06 | 83.50 | 86.79 |
| DAtRNet | 69.98 | 88.05 | 70.66 | 70.28 | 75.08 | 81.53 | 86.45 |
| Method 200 | 74.02 | 92.42 | 77.26 | 70.68 | 82.66 | 84.26 | 88.19 |

**TABLE II: Disentanglement score of method 200 and comparison with state-of-the-art using irs as metric (lower value indicates better performance)**

| Model | DeepFashion | | |
|---|---|---|---|
| | Pattern | Sleeve | Neckline |
| ResNet-18 | 9.63 | 8.44 | 9.47 |
| VGG-16-BN | 10.21 | 8.52 | 9.72 |
| FAttNet | 9.52 | 8.39 | 9.44 |
| DAtRNet | 9.41 | 8.24 | 9.10 |
| Method 200 | 8.45 | 6.63 | 4.61 |

### Fashion Attribute Recognition:-

Using one or more trainable models for the disentangled attribute embedding extraction in method 200, a dense layer is added for the attribute recognition. The performance of the architecture used by the system 100 is compared with the state-of-the-art approaches for both DeepFashion and Shopping100k datasets in Table I. For comparison, ResNet-18, VGG-16 with batch normalization, F-AttNet, and DAtRNet were considered, with classification accuracy as performance metric. From the results, it was observed that the method 200 outperforms all existing methods by a good margin for all attribute categories present in both datasets, except for color attribute in Shopping100k dataset, where it gave comparable performance. Now, to quantitatively analyze if the extracted embeddings are more disentangled than the state-of-the-art approaches, interventional robustness score (IRS), which measures three properties of disentanglement, *i*.*e*., modularity, compactness and explicitness, was used. For comparison, lower IRS denotes better disentanglement. From Table II, it can be observed that the method 200 has out-performed all existing methods, especially for neckline and sleeve, whose features are highly localized. To further analyze the localization of features using the method 200, a class activation map of the method 200 is created for different attributes and compared it with the state-of-the-art methods. From FIG. 6, it can be observed that all existing methods are unable to focus on the relevant regions for fine-grained feature extraction. On the contrary, the method 200 focuses on the relevant regions, while extracting disentangled features, giving clear reasoning behind its decision and improving the performance.

**TABLE III: Ablation study experiments for attribute recognition with deepfashion dataset using classification accuracy**

| Focus Area | Model | Pattern | Sleeve | Neckline |
|---|---|---|---|---|
| Multi-branch Feature | Only global feature, no fusion | 71.20 | 90.55 | 74.09 |
| | Only local feature, no fusion | 70.30 | 91.58 | 76.39 |
| | One branch, both global and local | 67.75 | 90.12 | 71.88 |
| | Multiplication before local | 66.01 | 89.65 | 72.94 |
| Gaussian blur | Model without gaussian blur | 68.15 | 89.22 | 71.65 |
| Fusion Block | Addition in place of fusion | 68.31 | 89.25 | 69.21 |
| | Multiplication in place of fusion | 71.20 | 91.33 | 76.26 |
| | LAFF in place of fusion | 71.01 | 91.27 | 76.70 |
| | AFF in place of fusion | 71.10 | 91.21 | 76.85 |
| | Only multi-feature attention in fusion | 72.97 | 91.70 | 76.73 |
| Backbone | Res-18 in place of VGG-16 | 68.77 | 91.17 | 73.16 |
| | Res-50 in place of VGG-16 | 68.78 | 91.24 | 72.66 |
| | Pre-act Res-18 as backbone | 71.23 | 89.99 | 72.50 |
| Dense layers | Two intermediate dense layers | 71.04 | 91.45 | 75.58 |
| Irrelevant maps | Neckline map for pattern and sleeve | 70.98 | 89.84 | - |
| | Sleeve map for pattern and neckline | 68.96 | - | 70.86 |
| | Torso map for sleeve and neckline | - | 91.58 | 72.75 |
| Perturbation in landmarks | 5-pixel shift for all landmarks | 73.03 | 91.45 | 76.20 |
| | 10-pixel shift for all landmarks | 72.26 | 91.33 | 75.86 |
| | 20-pixel shift for all landmarks | 71.45 | 90.03 | 74.68 |
| | 50-pixel shift for all landmarks | 70.30 | 86.57 | 69.93 |
| | LDAE-Net (method 300/system 100) | 74.02 | 92.42 | 77.26 |

Ablation study: An extensive set of ablation study experiments was performed to qualify the design choices in the block diagram for attribute recognition task. The comparison was done using DeepFashion dataset. Results are given in Table. 3, which investigates seven aspects of design choices. They are:
a. Multi-branch feature extraction: To demonstrate the need of both global and local features, one of them was omitted at a time and corresponding attribute recognition performance was determined. Also, the local features were extracted from the global branch by keeping only one branch. Further, the localization map was multiplied with the image before passing it through local branch. The method 200 outperformed all these variants, reinstating the importance of having separate branches for global and local feature extraction and reason for multiplying localization map after extracting features from the entire image.
b. Gaussian blur: To evaluate the importance of Gaussian blur for relevant feature selection from global features, this step was removed and directly multiplied part localization map with features from local branch, which appeared to be resulting in inferior performance. This is due to the hard attention being incorporated by the localization map in the absence of Gaussian blur which failed to capture features from the neighborhood.
c. Impact of fusion block: The impact of fusion block among the components of the example functional architecture as in FIGS. 4A through 4E was checked by replacing it with addition and multiplication operation, AFF and LAFF. Also, the importance of the ensemble of global description was observed by removing them from the fusion block. For all cases, the method 200 was found to be performing better.
d. Backbone networks: Once the structure of the network was finalized, experiments were conducted with several other backbones, such as Resnet-18 and Resnet-50, and pre-activation Resnet-18. From the results, it was observed that these backbones under-performed than VGG 16 with batch normalization [28], hence VGG 16 was chosen as the backbone of the functional architecture formed by the components in FIGS. 4A through 4E.
e. Number of dense layers: A single dense layer was considered for attribute recognition. To examine the model's performance with multiple dense layers, two intermediate hidden layers were added which performed comparatively less, mostly due to overfitting. This justifies use of the single dense layer for attribute recognition.
f. Irrelevant maps in local branch: It was considered that localization maps corresponding to relevant locations improve the attribute recognition performance of the functional architecture formed by the components in FIGS. 4A through 4E. To examine this, maps of irrelevant locations were used to get attribute recognition performance, e.g., using neckline map for sleeve attribute. From the results, it was observed that performance significantly reduced by using incorrect localization map, which substantiates use of the relevant localization map for better prediction.
g. Perturbation in landmark locations: To observe the impact of landmark detection on the method 200, a set of experiments were performed by perturbing the landmarks by shifting their locations by 5, 10, 20 and 50 pixels respectively, creating improper localization maps. From these results, it was observed that the performance drops as the perturbation increases, signifying the impact of landmark localization. However, it was also observed that the drop in performance is not significant till 10- pixel shift which indicates that the model is invariant to minor performance variation of landmark detection module.

**TABLE IV: Top-K retrieval accuracy for shopping100k and deepfashion datasets for search by query and one attribute manipulation, where K ∈ {10, 20, 3 0, 40, 50 } and comparison with state-of-the-art**

| Methods | Shopping 100k | | Deep Fashion | | | |
|---|---|---|---|---|---|---|
| | Top-10 | Top-20 | Top-30 | Top-10 | Top-20 | Top-30 |
| Attribute-based | 0.102 | 0.152 | 0.216 | 0.046 | 0.098 | 0.124 |
| AMNet | 0.256 | 0.361 | 0.429 | 0.141 | 0.193 | 0.229 |
| FashionSearchNet w/o Loc | 0.311 | 0.415 | 0.512 | 0.192 | 0.265 | 0.305 |
| FashionSearchNet | 0.384 | 0.474 | 0.572 | 0.252 | 0.335 | 0.381 |
| ADDE-M | 0.412 | 0.529 | 0.598 | 0.236 | 0.286 | 0.315 |
| DAtRNet | 0.634 | 0.651 | 0.677 | 0.479 | 0.627 | 0.662 |
| Method 200 | 0.668 | 0.742 | 0.782 | 0.701 | 0.803 | 0.858 |

**TABLE V:-**

| Comparison of top-30 retrieval accuracy w.r.t the state-of-the-art methods using shopping100k and deepfashion datasets | | | | |
|---|---|---|---|---|
| Methods | Shopping100k | | DeepFashion | |
| | Query | Query+att. | Query | Query+att. |
| Attribute-based: AlexNet | 0.593 | 0.211 | 0.464 | 0.123 |
| Attribute-based: ResNet-50 | 0.601 | 0.245 | 0.503 | 0.232 |
| Attribute-based: ViT | 0.582 | 0.186 | 0.401 | 0.151 |
| AMNet: AlexNet backbone | 0.637 | 0.405 | 0.483 | 0.246 |
| AMNet: ResNet backbone | 0.658 | 0.424 | 0.496 | 0.309 |
| AMNet: ViT backbone | 0.593 | 0.385 | 0.438 | 0.318 |
| FashionSearchNet w/o Loc | 0.611 | 0.512 | 0.448 | 0.313 |
| FashionSearchNet | 0.651 | 0.566 | 0.469 | 0.376 |
| DAtRNet | 0.752 | 0.677 | 0.731 | 0.662 |
| Method 200 | 0.910 | 0.782 | 0.884 | 0.858 |

**TABLE VI:**

| Impact of the number of manipulated attributes on the performance of shopping100k and deepfashion datasets and comparison with state-of-the-art approaches | | | | |
|---|---|---|---|---|
| Number of attributes | Shopping 100k | | DeepFashion | |
| | DAtRNet | Method 200 | DAtRNet | Method 200 |
| 0 | 0.752 | 0.910 | 0.731 | 0.884 |
| 1 | 0.677 | 0.782 | 0.662 | 0.858 |
| 2 | 0.648 | 0.642 | 0.573 | 0.830 |
| 3 | 0.484 | 0.580 | 0.647 | 0.819 |

**TABLE VII:**

| Hierarchical fashion taxonomy classification using Deepfashion and shopping100k datasets and comparison with state-of-the-art methods | | | | | | |
|---|---|---|---|---|---|---|
| Model | DeepFashion | | | Shopping100k | | |
| | L1 | L2 | L3 | L1 | L2 | L3 |
| HierC | 78.21 | 41.62 | 11.47 | 55.47 | 21.53 | 20.33 |
| Add-Net | 84.26 | 52.14 | 24.37 | 63.36 | 19.86 | 16.28 |
| Concat-Net | 84.24 | 48.81 | 21.98 | 63.35 | 19.55 | 15.61 |
| HiMulConE | 89.07 | 55.19 | 25.38 | 55.90 | 19.28 | 17.59 |
| Method 200 | 88.73 | 68.10 | 38.32 | 64.12 | 36.74 | 18.77 |

### Attribute-aware Substitute Item Retrieval

To observe the performance of the method 200 on attribute-aware substitute item retrieval, a set of experiments were conducted using DeepFashion and Shopping100k datasets. Three problems were considered for the analysis. Firstly, a substitute item retrieval was performed with query images where the retrieved items should have same attributes as the query product. Then, the substitute item retrieval was performed with one attribute manipulation, to retrieve products with attributes same as of query product, but target attribute should be same as the manipulated attribute. Further, this process is extended by manipulating more than one attribute at a time and check the performance. As a metric, Top-k retrieval accuracy was considered and counted it a 'hit' if at least one of k retrieved product has same attribute as desired.

First, an experiment was performed with only query image and query image with one attribute manipulation information and tabulate the results in Table V. For baseline, the conventional backbones, such as AlexNet, ResNet-50, and ViT; AMNet model with AlexNet, ResNet-50 and ViT backbone; FashionSearchNet with and without localization and DAtRNet, were considered, and compared top-30 retrieval accuracy for only query and query with one attribute manipulation for both DeepFashion and Shopping100k datasets. From Table V, it can be observed that the method 200 significantly outperforms the state-of-the-art approaches for both these retrieval problems.

Then, the variation in performance with respect to the number of retrieved items k was observed and compared with several state-of-the-art methods, such as attribute-based backbone, AMNet, FashionSearchNet with and without localization, and ADDE-M and DAtRNet. From the results in Table IV, it was observed that the method 200 is consistently outperforming state-of-the-art methods for both datasets.

To check ability of the method 200 to perform in multi-attribute manipulation scenario, the number of manipulated attributes was varied and compared its performance with state-of-the-art method DAtRNet. The results using both the datasets are shown in Table VI, where Top-30 retrieval accuracy were used for comparison. From these results, it can be observed that the method 200 outperforms existing DAtRNet model by a significant margin for both datasets even in multi-attribute manipulation scenario. Visual results for these applications can be found in FIG. 7.

### Hierarchical Taxonomy Classification:

Hierarchical taxonomy classification was performed for three levels using both datasets. For comparison, accuracy of the four state-of-the-art methods: HMCNF-augmented hierarchical classifier (HierC), AddNet, Concat-Net, and HiMulConE were considered. The results of taxonomy classification for both datasets are given in Table VII, where 'L1', 'L2' and 'L3' denote classification accuracies of Levels 1, 2 and 3 respectively. Here, it is observed that the method 200 outperforms existing methods for all levels, except for Level 1 in DeepFashion, where it gives a comparable performance. Also, it should be noted that existing methods were explicitly trained on annotations of corresponding level, whereas the method 200 used embeddings which were trained using attribute annotations, except for the global embedding. In FIG. 8, visual comparison between the method and the state-of-the-art approaches is showcased, where existing methods were found to be often wrongly classifying at least one level out of three.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims

The embodiments of present disclosure herein address unresolved problem of fashion attribute extraction of fashion items by means of image processing. The embodiment, thus provides a mechanism for fashion attribute extraction by processing image of the fashion item. Moreover, the embodiments herein further provides a mechanism of generating disentangled attribute embeddings of the fashion item image by fusing global and local features extracted from the image, using a global context-aware local attention (GCLA) fusion block.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), comprising:
receiving (202), via one or more hardware processors, an image of a fashion item as an input image;
generating (204), via the one or more hardware processors, one or more localization heatmaps by extracting a plurality of landmarks in the input image, wherein the one or more localization heatmaps are a plurality of fashion landmarks that specify at least one region in the input image;
extracting (206), via the one or more hardware processors, a first set of features from the input image by applying a first feature extractor, wherein the first set of features comprise a plurality of global features representing features of whole region of the fashion item;
extracting (208), via the one or more hardware processors, a second set of features from the input image with respect to the one or more localization heatmaps by applying a second feature extractor, wherein the second set of features comprise a plurality of local features associated with one or more specific parts of the fashion item;
obtaining (210), via the one or more hardware processors, a blurred localization map by adding gaussian blur to one or more localization maps used in the second feature extractor;
computing (212), via the one or more hardware processors, a plurality of modified second set of features by multiplying the blurred localization map with the extracted second set of features, wherein, by multiplying the blurred localization map with the second set of features causes masking of one or more regions of the input image that are categorized as irrelevant regions, and highlights one or more regions categorized as relevant parts; and
generating (214), via the one or more hardware processors, a plurality of disentangled attribute embeddings of the input image by fusing the first set of features and the computed modified second set of features, using a global context-aware local attention (GCLA) fusion block, wherein the plurality of disentangled attribute embeddings represent a plurality of unique features of the fashion item in the input image, wherein fusing the first set of features and the computed modified second set of features comprises:
performing (302) a self-attention fusion of the first set of features and the computed modified second set of features, wherein the self-attention fusion extracts the information from the first set of features in a first branch and a second branch that are parallel to each other, wherein the first branch and the second branch use one or more convolution layers and a channel attention block followed by a softmax operation, highlighting the information by adding the first set of features with the computed modified second set of features; and
generating (304) the plurality of disentangled attribute embeddings by applying one or more excited global descriptors with a sigmoid activation layer to the fused information and multiplying with the fused information from the first set of features with the modified second set of features.

2. The method as claimed in claim 1, wherein a landmark detector used for generating the localization heatmaps is a fashion landmark detection architecture trained on a plurality of datasets.

3. The method as claimed in claim 1, wherein the plurality of disentangled attribute embeddings of the input image are used for at least one of a) a location aware fashion attribute recognition, b) an attribute-aware similar item retrieval, and c) fashion taxonomy classification.

4. A system (100), comprising:
one or more hardware processors (102);
a communication interface (112); and
a memory (104) story a plurality of instructions, which cause the one or more hardware processors to:
receive an image of a fashion item as an input image;
generate one or more localization heatmaps by extracting a plurality of landmarks in the input image, wherein the one or more localization heatmaps are a plurality of fashion landmarks that specify at least one region in the input image;
extract a first set of features from the input image by applying a first feature extractor, wherein the first set of features comprise a plurality of global features representing features of whole region of the fashion item;
extract a second set of features from the input image with respect to the one or more localization heatmaps by applying a second feature extractor, wherein the second set of features comprise a plurality of local features associated with one or more specific parts of the fashion item;
obtain a blurred localization map by adding gaussian blur to one or more localization maps used in the second feature extractor;
compute a plurality of modified second set of features by multiplying the blurred localization map with the extracted second set of features, wherein,
by multiplying the blurred localization map with the second set of features causes masking of one or more regions of the input image that are categorized as irrelevant regions, and highlights one or more regions categorized as relevant parts; and
generate a plurality of disentangled attribute embeddings of the input image by fusing the first set of features and the computed modified second set of features, using a global context-aware local attention (GCLA) fusion block, wherein the plurality of disentangled attribute embeddings represent a plurality of unique features of the fashion item in the input image, wherein the one or more hardware processors are configured to fuse the first set of features and the computed modified second set of features by:
performing a self-attention fusion of the first set of features and the computed modified second set of features, wherein the self-attention fusion extracts the information from the first set of features in a first branch and a second branch that are parallel to each other, wherein the first branch and the second branch use one or more convolution layers and a channel attention block followed by a softmax operation, highlighting the information by adding the first set of features with the computed modified second set of features; and
generating the plurality of disentangled attribute embeddings by applying one or more excited global descriptors with a sigmoid activation layer to the fused information and multiplying with the fused information from the first set of features with the modified second set of features.

5. The system as claimed in claim 4, wherein a landmark detector used for generating the localization heatmaps is a fashion landmark detection architecture trained on a plurality of datasets.

6. The system as claimed in claim 4, wherein the one or more hardware processors are configured to use the plurality of disentangled attribute embeddings of the input image for at least one of a) a location aware fashion attribute recognition, b) an attribute-aware similar item retrieval, and c) fashion taxonomy classification.

7. One or more non-transitory machine-readable information storage mediums comprising one or more instructions which when executed by one or more hardware processors cause:
receiving an image of a fashion item as an input image;
generating one or more localization heatmaps by extracting a plurality of landmarks in the input image, wherein the one or more localization heatmaps are a plurality of fashion landmarks that specify at least one region in the input image;
extracting a first set of features from the input image by applying a first feature extractor, wherein the first set of features comprise a plurality of global features representing features of whole region of the fashion item;
extracting a second set of features from the input image with respect to the one or more localization heatmaps by applying a second feature extractor, wherein the second set of features comprise a plurality of local features associated with one or more specific parts of the fashion item;
obtaining a blurred localization map by adding gaussian blur to one or more localization maps used in the second feature extractor;
computing a plurality of modified second set of features by multiplying the blurred localization map with the extracted second set of features, wherein, by multiplying the blurred localization map with the second set of features causes masking of one or more regions of the input image that are categorized as irrelevant regions, and
highlights one or more regions categorized as relevant parts; and
generating a plurality of disentangled attribute embeddings of the input image by fusing the first set of features and the computed modified second set of features, using a global context-aware local attention (GCLA) fusion block, wherein the plurality of disentangled attribute embeddings represent a plurality of unique features of the fashion item in the input image, wherein fusing the first set of features and the computed modified second set of features comprises:
performing a self-attention fusion of the first set of features and the computed modified second set of features, wherein the self-attention fusion extracts the information from the first set of features in a first branch and a second branch that are parallel to each other, wherein the first branch and the second branch use one or more convolution layers and a channel attention block followed by a softmax operation, highlighting the information by adding the first set of features with the computed modified second set of features; and
generating the plurality of disentangled attribute embeddings by applying one or more excited global descriptors with a sigmoid activation layer to the fused information and multiplying with the fused information from the first set of features with the modified second set of features.

8. The one or more non-transitory machine readable information storage mediums as claimed in claim 7, wherein a landmark detector used for generating the localization heatmaps is a fashion landmark detection architecture trained on a plurality of datasets.

9. The one or more non-transitory machine readable information storage mediums as claimed in claim 7, wherein the plurality of disentangled attribute embeddings of the input image are used for at least one of a) a location aware fashion attribute recognition, b) an attribute-aware similar item retrieval, and c) fashion taxonomy classification.

## Patentansprüche

1. Prozessorimplementiertes Verfahren (200), umfassend:
Empfangen (202), über einen oder mehrere Hardwareprozessoren, eines Bildes eines Modeartikels als ein Eingabebild;
Erzeugen (204), über den einen oder die mehreren Hardwareprozessoren, einer oder mehrerer Lokalisierungs-Heatmaps durch Extrahieren einer Mehrzahl von Orientierungspunkten in dem Eingabebild, wobei die eine oder die mehreren Lokalisierungs-Heatmaps eine Mehrzahl von Mode-Orientierungspunkten sind, die mindestens eine Region in dem Eingabebild spezifizieren;
Extrahieren (206), über den einen oder die mehreren Hardwareprozessoren, eines ersten Satzes von Merkmalen aus dem Eingabebild durch Anwenden eines ersten Merkmalsextraktors, wobei der erste Satz von Merkmalen eine Mehrzahl von globalen Merkmalen umfasst, die Merkmale der gesamten Region des Modeartikels darstellen;
Extrahieren (208), über den einen oder die mehreren Hardwareprozessoren, eines zweiten Satzes von Merkmalen aus dem Eingabebild in Bezug auf die eine oder die mehreren Lokalisierungs-Heatmaps durch Anwenden eines zweiten Merkmalsextraktors, wobei der zweite Satz von Merkmalen eine Mehrzahl von lokalen Merkmalen umfasst, die einem oder mehreren spezifischen Teilen des Modeartikels zugeordnet sind;
Erhalten (210), über den einen oder die mehreren Hardwareprozessoren, einer unscharfen Lokalisierungskarte durch Hinzufügen von Gaußscher Unschärfe zu einer oder mehreren Lokalisierungskarten, die in dem zweiten Merkmalsextraktor verwendet werden;
Berechnen (212), über den einen oder die mehreren Hardwareprozessoren, einer Mehrzahl von modifizierten zweiten Sätzen von Merkmalen durch Multiplizieren der unscharfen Lokalisierungskarte mit dem extrahierten zweiten Satz von Merkmalen, wobei durch Multiplizieren der unscharfen Lokalisierungskarte mit dem zweiten Satz von Merkmalen eine Maskierung von einer oder mehreren Regionen des Eingabebildes verursacht wird, die als irrelevante Regionen kategorisiert sind, und eine oder mehrere Regionen hervorgehoben werden, die als relevante Teile kategorisiert sind; und
Erzeugen (214), über den einen oder die mehreren Hardwareprozessoren, einer Mehrzahl von entwirrten Attributeinbettungen des Eingabebildes durch Fusionieren des ersten Satzes von Merkmalen und des berechneten modifizierten zweiten Satzes von Merkmalen unter Verwendung eines globalen kontextbewussten lokalen Aufmerksamkeits(GCLA)-Fusionsblocks, wobei die Mehrzahl von entwirrten Attributeinbettungen eine Mehrzahl von eindeutigen Merkmalen des Modeartikels in dem Eingabebild darstellen, wobei das Fusionieren des ersten Satzes von Merkmalen und des berechneten modifizierten zweiten Satzes von Merkmalen Folgendes umfasst:
Durchführen (302) einer Selbstaufmerksamkeitsfusion des ersten Satzes von Merkmalen und des berechneten modifizierten zweiten Satzes von Merkmalen, wobei die Selbstaufmerksamkeitsfusion die Informationen aus dem ersten Satz von Merkmalen in einem ersten Zweig und einem zweiten Zweig extrahiert, die parallel zueinander sind, wobei der erste Zweig und der zweite Zweig eine oder mehrere Faltungsschichten und einen Kanalaufmerksamkeitsblock verwenden, gefolgt von einer Softmax-Operation, Hervorheben der Informationen durch Hinzufügen des ersten Satzes von Merkmalen zu dem berechneten modifizierten zweiten Satz von Merkmalen; und
Erzeugen (304) der Mehrzahl von entwirrten Attributeinbettungen durch Anwenden eines oder mehrerer angeregter globaler Deskriptoren mit einer Sigmoid-Aktivierungsschicht auf die fusionierten Informationen und Multiplizieren mit den fusionierten Informationen aus dem ersten Satz von Merkmalen mit dem modifizierten zweiten Satz von Merkmalen.

2. Verfahren nach Anspruch 1, wobei ein Orientierungspunktdetektor, der zum Erzeugen der Lokalisierungs-Heatmaps verwendet wird, eine Mode-Orientierungspunkt-Detektionsarchitektur ist, die auf eine Mehrzahl von Datensätzen trainiert ist.

3. Verfahren nach Anspruch 1, wobei die Mehrzahl von entwirrten Attributeinbettungen des Eingabebildes für mindestens eines von a) einer ortsbewussten Mode-Attributerkennung, b) einem attributbewussten ähnlichen Artikelabruf und c) Mode-Taxonomie-Klassifizierung verwendet wird.

4. System (100), umfassend:
einen oder mehrere Hardwareprozessoren (102);
eine Kommunikationsschnittstelle (112); und
einen Speicher (104), der eine Mehrzahl von Anweisungen speichert, die den einen oder die mehreren Hardwareprozessoren zu Folgendem veranlassen:
Empfangen eines Bildes eines Modeartikels als ein Eingabebild;
Erzeugen einer oder mehrerer Lokalisierungs-Heatmaps durch Extrahieren einer Mehrzahl von Orientierungspunkten in dem Eingabebild, wobei die eine oder die mehreren Lokalisierungs-Heatmaps eine Mehrzahl von Mode-Orientierungspunkten sind, die mindestens eine Region in dem Eingabebild spezifizieren;
Extrahieren eines ersten Satzes von Merkmalen aus dem Eingabebild durch Anwenden eines ersten Merkmalsextraktors, wobei der erste Satz von Merkmalen eine Mehrzahl von globalen Merkmalen umfasst, die Merkmale der gesamten Region des Modeartikels darstellen;
Extrahieren eines zweiten Satzes von Merkmalen aus dem Eingabebild in Bezug auf die eine oder die mehreren Lokalisierungs-Heatmaps durch Anwenden eines zweiten Merkmalsextraktors, wobei der zweite Satz von Merkmalen eine Mehrzahl von lokalen Merkmalen umfasst, die einem oder mehreren spezifischen Teilen des Modeartikels zugeordnet sind;
Erhalten einer unscharfen Lokalisierungskarte durch Hinzufügen von Gaußscher Unschärfe zu einer oder mehreren Lokalisierungskarten, die in dem zweiten Merkmalsextraktor verwendet werden;
Berechnen einer Mehrzahl von modifizierten zweiten Sätzen von Merkmalen durch Multiplizieren der unscharfen Lokalisierungskarte mit dem extrahierten zweiten Satz von Merkmalen, wobei durch Multiplizieren der unscharfen Lokalisierungskarte mit dem zweiten Satz von Merkmalen eine Maskierung von einer oder mehreren Regionen des Eingabebildes verursacht wird, die als irrelevante Regionen kategorisiert sind, und eine oder mehrere Regionen hervorgehoben werden, die als relevante Teile kategorisiert sind; und
Erzeugen einer Mehrzahl von entwirrten Attributeinbettungen des Eingabebildes durch Fusionieren des ersten Satzes von Merkmalen und des berechneten modifizierten zweiten Satzes von Merkmalen unter Verwendung eines globalen kontextbewussten lokalen Aufmerksamkeits(GCLA)-Fusionsblocks, wobei die Mehrzahl von entwirrten Attributeinbettungen eine Mehrzahl von eindeutigen Merkmalen des Modeartikels in dem Eingabebild darstellen, wobei der eine oder die mehreren Hardwareprozessoren konfiguriert sind, um den ersten Satz von Merkmalen und den berechneten modifizierten zweiten Satz von Merkmalen durch Folgendes zu fusionieren:
Durchführen einer Selbstaufmerksamkeitsfusion des ersten Satzes von Merkmalen und des berechneten modifizierten zweiten Satzes von Merkmalen, wobei die Selbstaufmerksamkeitsfusion die Informationen aus dem ersten Satz von Merkmalen in einem ersten Zweig und einem zweiten Zweig extrahiert, die parallel zueinander sind, wobei der erste Zweig und der zweite Zweig eine oder mehrere Faltungsschichten und einen Kanalaufmerksamkeitsblock verwenden, gefolgt von einer Softmax-Operation, Hervorheben der Informationen durch Hinzufügen des ersten Satzes von Merkmalen zu dem berechneten modifizierten zweiten Satz von Merkmalen; und
Erzeugen der Mehrzahl von entwirrten Attributeinbettungen durch Anwenden eines oder mehrerer angeregter globaler Deskriptoren mit einer Sigmoid-Aktivierungsschicht auf die fusionierten Informationen und Multiplizieren mit den fusionierten Informationen aus dem ersten Satz von Merkmalen mit dem modifizierten zweiten Satz von Merkmalen.

5. System nach Anspruch 4, wobei ein Orientierungspunktdetektor, der zum Erzeugen der Lokalisierungs-Heatmaps verwendet wird, eine Mode-Orientierungspunkt-Detektionsarchitektur ist, die auf eine Mehrzahl von Datensätzen trainiert ist.

6. System nach Anspruch 4, wobei der eine oder die mehreren Hardwareprozessoren konfiguriert sind, um die Mehrzahl von entwirrten Attributeinbettungen des Eingabebildes für mindestens eines von a) einer ortsbewussten Mode-Attributerkennung, b) einem attributbewussten ähnlichen Artikelabruf und c) Mode-Taxonomie-Klassifizierung zu verwenden.

7. Ein oder mehrere nichtflüchtige maschinenlesbare Informationsspeichermedien, die eine oder mehrere Anweisungen umfassen, die bei Ausführung durch einen oder mehrere Hardwareprozessoren Folgendes veranlassen:
Empfangen eines Bildes eines Modeartikels als ein Eingabebild;
Erzeugen einer oder mehrerer Lokalisierungs-Heatmaps durch Extrahieren einer Mehrzahl von Orientierungspunkten in dem Eingabebild, wobei die eine oder die mehreren Lokalisierungs-Heatmaps eine Mehrzahl von Mode-Orientierungspunkten sind, die mindestens eine Region in dem Eingabebild spezifizieren;
Extrahieren eines ersten Satzes von Merkmalen aus dem Eingabebild durch Anwenden eines ersten Merkmalsextraktors, wobei der erste Satz von Merkmalen eine Mehrzahl von globalen Merkmalen umfasst, die Merkmale der gesamten Region des Modeartikels darstellen;
Extrahieren eines zweiten Satzes von Merkmalen aus dem Eingabebild in Bezug auf die eine oder die mehreren Lokalisierungs-Heatmaps durch Anwenden eines zweiten Merkmalsextraktors, wobei der zweite Satz von Merkmalen eine Mehrzahl von lokalen Merkmalen umfasst, die einem oder mehreren spezifischen Teilen des Modeartikels zugeordnet sind;
Erhalten einer unscharfen Lokalisierungskarte durch Hinzufügen von Gaußscher Unschärfe zu einer oder mehreren Lokalisierungskarten, die in dem zweiten Merkmalsextraktor verwendet werden;
Berechnen einer Mehrzahl von modifizierten zweiten Sätzen von Merkmalen durch Multiplizieren der unscharfen Lokalisierungskarte mit dem extrahierten zweiten Satz von Merkmalen, wobei durch Multiplizieren der unscharfen Lokalisierungskarte mit dem zweiten Satz von Merkmalen eine Maskierung von einer oder mehreren Regionen des Eingabebildes verursacht wird, die als irrelevante Regionen kategorisiert sind, und eine oder mehrere Regionen hervorgehoben werden, die als relevante Teile kategorisiert sind; und
Erzeugen einer Mehrzahl von entwirrten Attributeinbettungen des Eingabebildes durch Fusionieren des ersten Satzes von Merkmalen und des berechneten modifizierten zweiten Satzes von Merkmalen unter Verwendung eines globalen kontextbewussten lokalen Aufmerksamkeits(GCLA)-Fusionsblocks, wobei die Mehrzahl von entwirrten Attributeinbettungen eine Mehrzahl von eindeutigen Merkmalen des Modeartikels in dem Eingabebild darstellen, wobei das Fusionieren des ersten Satzes von Merkmalen und des berechneten modifizierten zweiten Satzes von Merkmalen Folgendes umfasst:
Durchführen einer Selbstaufmerksamkeitsfusion des ersten Satzes von Merkmalen und des berechneten modifizierten zweiten Satzes von Merkmalen, wobei die Selbstaufmerksamkeitsfusion die Informationen aus dem ersten Satz von Merkmalen in einem ersten Zweig und einem zweiten Zweig extrahiert, die parallel zueinander sind, wobei der erste Zweig und der zweite Zweig eine oder mehrere Faltungsschichten und einen Kanalaufmerksamkeitsblock verwenden, gefolgt von einer Softmax-Operation, Hervorheben der Informationen durch Hinzufügen des ersten Satzes von Merkmalen zu dem berechneten modifizierten zweiten Satz von Merkmalen; und
Erzeugen der Mehrzahl von entwirrten Attributeinbettungen durch Anwenden eines oder mehrerer angeregter globaler Deskriptoren mit einer Sigmoid-Aktivierungsschicht auf die fusionierten Informationen und Multiplizieren mit den fusionierten Informationen aus dem ersten Satz von Merkmalen mit dem modifizierten zweiten Satz von Merkmalen.

8. Ein oder mehrere nichtflüchtige maschinenlesbare Informationsspeichermedien nach Anspruch 7, wobei ein Orientierungspunktdetektor, der zum Erzeugen der Lokalisierungs-Heatmaps verwendet wird, eine Mode-Orientierungspunkt-Detektionsarchitektur ist, die auf eine Mehrzahl von Datensätzen trainiert ist.

9. Ein oder mehrere nichtflüchtige maschinenlesbare Informationsspeichermedien nach Anspruch 7, wobei die Mehrzahl von entwirrten Attributeinbettungen des Eingabebildes für mindestens eines von a) einer ortsbewussten Mode-Attributerkennung, b) einem attributbewussten ähnlichen Artikelabruf und c) Mode-Taxonomie-Klassifizierung verwendet wird.

## Revendications

1. Procédé mis en œuvre par processeur (200), comprenant :
la réception (202), via un ou plusieurs processeurs matériels, d'une image d'un article de mode en tant qu'image d'entrée ;
la génération (204), via les un ou plusieurs processeurs matériels, d'une ou plusieurs cartes thermiques de localisation en extrayant une pluralité de points de repère dans l'image d'entrée, dans lequel les une ou plusieurs cartes thermiques de localisation sont une pluralité de points de repère de mode qui spécifient au moins une région dans l'image d'entrée ;
l'extraction (206), via les un ou plusieurs processeurs matériels, d'un premier ensemble de caractéristiques à partir de l'image d'entrée en appliquant un premier extracteur de caractéristiques, dans lequel le premier ensemble de caractéristiques comprend une pluralité de caractéristiques globales représentant des caractéristiques d'une région entière de l'article de mode ;
l'extraction (208), via les un ou plusieurs processeurs matériels, d'un second ensemble de caractéristiques à partir de l'image d'entrée par rapport aux une ou plusieurs cartes thermiques de localisation en appliquant un second extracteur de caractéristiques, dans lequel le second ensemble de caractéristiques comprend une pluralité de caractéristiques locales associées à une ou plusieurs parties spécifiques de l'article de mode ;
l'obtention (210), via les un ou plusieurs processeurs matériels, d'une carte de localisation floue en ajoutant un flou gaussien à une ou plusieurs cartes de localisation utilisées dans le second extracteur de caractéristiques ;
le calcul (212), via les un ou plusieurs processeurs matériels, d'une pluralité de seconds ensembles modifiés de caractéristiques en multipliant la carte de localisation floue par le second ensemble de caractéristiques extrait, dans lequel, en multipliant la carte de localisation floue par le second ensemble de caractéristiques, provoque un masquage d'une ou plusieurs régions de l'image d'entrée qui sont catégorisées en tant que régions non pertinentes, et met en évidence une ou plusieurs régions catégorisées en tant que parties pertinentes ; et
la génération (214), via les un ou plusieurs processeurs matériels, d'une pluralité de représentations d'attributs désentrelacées de l'image d'entrée en fusionnant le premier ensemble de caractéristiques et le second ensemble modifié calculé de caractéristiques, en utilisant un bloc de fusion d'attention locale sensible au contexte global (GCLA), dans lequel la pluralité de représentations d'attributs désentrelacées représentent une pluralité de caractéristiques uniques de l'article de mode dans l'image d'entrée, dans lequel la fusion du premier ensemble de caractéristiques et du second ensemble modifié calculé de caractéristiques comprend :
la réalisation (302) d'une fusion d'auto-attention du premier ensemble de caractéristiques et du second ensemble modifié calculé de caractéristiques, dans lequel la fusion d'auto-attention extrait les informations du premier ensemble de caractéristiques dans une première branche et une seconde branche qui sont parallèles l'une à l'autre, dans lequel la première branche et la seconde branche utilisent une ou plusieurs couches de convolution et un bloc d'attention de canal suivi d'une opération softmax, mettant en évidence les informations en ajoutant le premier ensemble de caractéristiques au second ensemble modifié calculé de caractéristiques ; et
la génération (304) de la pluralité de représentations d'attributs désentrelacées en appliquant un ou plusieurs descripteurs globaux excités avec une couche d'activation sigmoïde aux informations fusionnées et en multipliant par les informations fusionnées du premier ensemble de caractéristiques avec le second ensemble modifié de caractéristiques.

2. Procédé selon la revendication 1, dans lequel un détecteur de points de repère utilisé pour générer les cartes thermiques de localisation est une architecture de détection de points de repère de mode entraînée sur une pluralité d'ensembles de données.

3. Procédé selon la revendication 1, dans lequel la pluralité de représentations d'attributs désentrelacées de l'image d'entrée sont utilisées pour au moins l'une parmi a) une reconnaissance d'attributs de mode tenant compte de la localisation, b) une recherche d'articles similaires tenant compte des attributs, et c) une classification selon une taxonomie de la mode.

4. Système (100), comprenant :
un ou plusieurs processeurs matériels (102) ;
une interface de communication (112) ; et
une mémoire (104) stockant une pluralité d'instructions, qui amènent les un ou
plusieurs processeurs matériels à :
recevoir une image d'un article de mode en tant qu'image d'entrée ;
générer une ou plusieurs cartes thermiques de localisation en extrayant une pluralité de points de repère dans l'image d'entrée, dans lequel les une ou plusieurs cartes thermiques de localisation sont une pluralité de points de repère de mode qui spécifient au moins une région dans l'image d'entrée ;
extraire un premier ensemble de caractéristiques à partir de l'image d'entrée en appliquant un premier extracteur de caractéristiques, dans lequel le premier ensemble de caractéristiques comprend une pluralité de caractéristiques globales représentant des caractéristiques d'une région entière de l'article de mode ;
extraire un second ensemble de caractéristiques à partir de l'image d'entrée par rapport aux une ou plusieurs cartes thermiques de localisation en appliquant un second extracteur de caractéristiques, dans lequel le second ensemble de caractéristiques comprend une pluralité de caractéristiques locales associées à une ou plusieurs parties spécifiques de l'article de mode ;
obtenir une carte de localisation floue en ajoutant un flou gaussien à une ou plusieurs cartes de localisation utilisées dans le second extracteur de caractéristiques ;
calculer une pluralité de seconds ensembles modifiés de caractéristiques en multipliant la carte de localisation floue par le second ensemble de caractéristiques extrait, dans lequel, en multipliant la carte de localisation floue par le second ensemble de caractéristiques, provoque un masquage d'une ou plusieurs régions de l'image d'entrée qui sont catégorisées en tant que régions non pertinentes, et met en évidence une ou plusieurs régions catégorisées en tant que parties pertinentes ; et
générer une pluralité de représentations d'attributs désentrelacées de l'image d'entrée en fusionnant le premier ensemble de caractéristiques et le second ensemble modifié calculé de caractéristiques, en utilisant un bloc de fusion d'attention locale sensible au contexte global (GCLA), dans lequel la pluralité de représentations d'attributs désentrelacées représentent une pluralité de caractéristiques uniques de l'article de mode dans l'image d'entrée, dans lequel les un ou plusieurs processeurs matériels sont configurés pour fusionner le premier ensemble de caractéristiques et le second ensemble modifié calculé de caractéristiques en :
réalisant une fusion d'auto-attention du premier ensemble de caractéristiques et du second ensemble modifié calculé de caractéristiques, dans lequel la fusion d'auto-attention extrait les informations du premier ensemble de caractéristiques dans une première branche et une seconde branche qui sont parallèles l'une à l'autre, dans lequel la première branche et la seconde branche utilisent une ou plusieurs couches de convolution et un bloc d'attention de canal suivi d'une opération softmax, mettant en évidence les informations en ajoutant le premier ensemble de caractéristiques au second ensemble modifié calculé de caractéristiques ; et
générant la pluralité de représentations d'attributs désentrelacées en appliquant un ou plusieurs descripteurs globaux excités avec une couche d'activation sigmoïde aux informations fusionnées et en multipliant par les informations fusionnées du premier ensemble de caractéristiques avec le second ensemble modifié de caractéristiques.

5. Système selon la revendication 4, dans lequel un détecteur de points de repère utilisé pour générer les cartes thermiques de localisation est une architecture de détection de points de repère de mode entraînée sur une pluralité d'ensembles de données.

6. Système selon la revendication 4, dans lequel les un ou plusieurs processeurs matériels sont configurés pour utiliser la pluralité de représentations d'attributs désentrelacées de l'image d'entrée pour au moins l'une parmi a) une reconnaissance d'attributs de mode tenant compte de la localisation, b) une recherche d'articles similaires tenant compte des attributs, et c) une classification selon une taxonomie de la mode.

7. Un ou plusieurs supports de stockage d'informations lisibles par machine non transitoires comprenant une ou plusieurs instructions qui, lorsqu'elles sont exécutées par un ou plusieurs processeurs matériels, amènent :
la réception d'une image d'un article de mode en tant qu'image d'entrée ;
la génération d'une ou plusieurs cartes thermiques de localisation en extrayant une pluralité de points de repère dans l'image d'entrée, dans lequel les une ou plusieurs cartes thermiques de localisation sont une pluralité de points de repère de mode qui spécifient au moins une région dans l'image d'entrée ;
l'extraction d'un premier ensemble de caractéristiques à partir de l'image d'entrée en appliquant un premier extracteur de caractéristiques, dans lequel le premier ensemble de caractéristiques comprend une pluralité de caractéristiques globales représentant des caractéristiques d'une région entière de l'article de mode ;
l'extraction d'un second ensemble de caractéristiques à partir de l'image d'entrée par rapport aux une ou plusieurs cartes thermiques de localisation en appliquant un second extracteur de caractéristiques, dans lequel le second ensemble de caractéristiques comprend une pluralité de caractéristiques locales associées à une ou plusieurs parties spécifiques de l'article de mode ;
l'obtention d'une carte de localisation floue en ajoutant un flou gaussien à une ou plusieurs cartes de localisation utilisées dans le second extracteur de caractéristiques ;
le calcul d'une pluralité de seconds ensembles modifiés de caractéristiques en multipliant la carte de localisation floue par le second ensemble de caractéristiques extrait, dans lequel, en multipliant la carte de localisation floue par le second ensemble de caractéristiques, provoque un masquage d'une ou plusieurs régions de l'image d'entrée qui sont catégorisées en tant que régions non pertinentes, et met en évidence une ou plusieurs régions catégorisées en tant que parties pertinentes ; et
la génération d'une pluralité de représentations d'attributs désentrelacées de l'image d'entrée en fusionnant le premier ensemble de caractéristiques et le second ensemble modifié calculé de caractéristiques, en utilisant un bloc de fusion d'attention locale sensible au contexte global (GCLA), dans lequel la pluralité de représentations d'attributs désentrelacées représentent une pluralité de caractéristiques uniques de l'article de mode dans l'image d'entrée, dans lequel la fusion du premier ensemble de caractéristiques et du second ensemble modifié calculé de caractéristiques comprend :
la réalisation d'une fusion d'auto-attention du premier ensemble de caractéristiques et du second ensemble modifié calculé de caractéristiques, dans lequel la fusion d'auto-attention extrait les informations du premier ensemble de caractéristiques dans une première branche et une seconde branche qui sont parallèles l'une à l'autre, dans lequel la première branche et la seconde branche utilisent une ou plusieurs couches de convolution et un bloc d'attention de canal suivi d'une opération softmax, mettant en évidence les informations en ajoutant le premier ensemble de caractéristiques au second ensemble modifié calculé de caractéristiques ; et
la génération de la pluralité de représentations d'attributs désentrelacées en appliquant un ou plusieurs descripteurs globaux excités avec une couche d'activation sigmoïde aux informations fusionnées et en multipliant par les informations fusionnées du premier ensemble de caractéristiques avec le second ensemble modifié de caractéristiques.

8. Un ou plusieurs supports de stockage d'informations lisibles par machine non transitoires selon la revendication 7, dans lesquels un détecteur de points de repère utilisé pour générer les cartes thermiques de localisation est une architecture de détection de points de repère de mode entraînée sur une pluralité d'ensembles de données.

9. Un ou plusieurs supports de stockage d'informations lisibles par machine non transitoires selon la revendication 7, dans lesquels la pluralité de représentations d'attributs désentrelacées de l'image d'entrée sont utilisées pour au moins l'une parmi a) une reconnaissance d'attributs de mode tenant compte de la localisation, b) une recherche d'articles similaires tenant compte des attributs, et c) une classification selon une taxonomie de la mode.
